# EUROPÄISCHE PATENTSCHRIFT

(11) **EP 0 345 585 B1**
(45) Veröffentlichungstag und Bekanntmachung des Hinweises auf die Patenterteilung: **10.02.1993**
(21) Anmeldenummer: 89109626.5
(22) Anmeldetag: 29.05.1989
(51) Int. Cl.: B65G 47/31

(54) **Fördervorrichtung für Süsswarenstücke**
Conveyor apparatus for sweets
Dispositif de transport pour des bonbons

(30) Priorität: 07.06.1988 DE 3819348
(43) Veröffentlichungstag der Anmeldung: 13.12.1989
(73) Patentinhaber: Klöckner Hänsel GmbH, 30024 Hannover (DE)
(72) Erfinder: Hogenkamp, Wilhelm, D-3000 Hannover 1 (DE)
(74) Vertreter: Rehberg, Elmar, Dipl.-Ing.

(56) Entgegenhaltungen:
- DE-A- 2 711 039
- DE-A- 3 546 248

## Beschreibung

Die Erfindung bezieht sich auf eine Fördervorrichtung mit einem ersten, mit einer ersten Geschwindigkeit angetriebenen Förderband, auf welchem Süßwarenstücke reihenweise in sich quer zur Förderrichtung erstreckenden Reihen mit einem ersten Reihenabstand herangeführt werden, mit einem zweiten, mit einer von der ersten Geschwindigkeit verschiedenen zweiten Geschwindigkeit angetriebenen Förderband, auf das die Reihen von Süßwarenstücken mit einem zweiten, vom ersten Reihenabstand verschiedenen Reihenabstand abgesetzt werden, wobei die einander zugekehrten Umlenkstellen des ersten und des zweiten Förderbands auf einem hin und her beweglich angetriebenen Schlitten angeordnet sind und eine wandernde Übergabestelle bilden. Solche Fördervorrichtungen werden benutzt, um Süßwarenstücke, insbesondere kleine Schokoladetafeln, Napolitaines o. dgl. aus einer Eintafelanlage abzunehmen, wobei die kleinen Süßwarenstücke beispielsweise bereits in Gruppen anfallen. Unter einer solchen Gruppe wird ein Feld einer Vielzahl von Süßwarenstücken verstanden, wobei sich von Gruppe zu Gruppe ein Gruppenabstand und innerhalb der Reihen einer Gruppe Reihenabstände ergeben. Es ist auch möglich, daß der Gruppenabstand dem Reihenabstand entspricht, so daß letztendlich auf dem ersten Förderband nur reihenweise unterscheidbare Süßwarenstücke herangeführt werden. Im einen wie im anderen Fall ergibt sich die Aufgabe, die Süßwarenstücke gruppenweise abzusetzen, also in Gruppen zu überführen und diese Gruppen beispielsweise mehreren Packmaschinen abwechselnd zuzuleiten. Eine Gruppe kann beispielsweise aus vier Reihen Süßwarenstücken bestehen, wobei in jeder Reihe beispielsweise 25 Stück Süßwarenstücke nebeneinander angeordnet sind.

Eine Fördervorrichtung der eingangs beschriebenen Art ist aus der DE-PS 685 182 bekannt. Dabei werden neben einer Reihe weiterer Förderbänder jedenfalls ein erstes und ein zweites Förderband angewendet, deren beide einander zugekehrte und unmittelbar benachbart angeordnete Umlenkstellen eine wandernde Übergabestelle bilden, indem die Umlenkstellen und entsprechende Umlenkrollen für die beiden Förderbänder auf einem Schlitten angeordnet sind, der hin- und hergehend in bzw. entgegengesetzt zu der Förderrichtung angetrieben wird. Die Geschwindigkeit des zweiten Förderbands ist hier höher als die Geschwindigkeit des ersten Förderbands, so daß durch den Sprung in der Geschwindigkeit bei der Bewegung der wandernden Übergabestelle entgegen der Förderrichtung der Reihenabstand zwischen den Süßwarenstücken vergrößert wird. Streng genommen gilt dies nur dann, wenn der Schlitten bei der Rückwärtsbewegung mit einer konstanten Geschwindigkeit zurückbewegt wird. Gelingt es nicht, diese Geschwindigkeit konstant zu halten, dann wirkt sich dies so aus, daß auch die Reihenabstände auf dem zweiten Förderband nicht mehr konstant sind. Zur Gruppenbildung, also zur Vergrößerung des Abstands zwischen zwei nicht mehr zu einer Gruppe gehörenden Reihen wird der Schlitten und die wandernde Umlenkstelle in Förderrichtung bewegt, wobei die Bewegungsgeschwindigkeit des Schlittens mit der Geschwindigkeit, mit der das erste Förderband angetrieben wird, gleich groß gewählt ist. Insoweit wird während dieser Zeit keine Reihe von Süßwarenstücken auf das zweite Förderband übergeben. Andererseits wird aber während dieser Zeit auch das zweite Förderband mit der vergleichsweise höheren Geschwindigkeit angetrieben, so daß sich ein Gruppenabstand, also eine Lücke von Gruppe zu Gruppe, bildet. Durch den notwendigerweise vorhandenen Geschwindigkeitssprung zwischen der höheren Geschwindigkeit des zweiten Förderbands im Vergleich zur niedrigeren Geschwindigkeit des ersten Förderbands vergrößert sich auch zwangsweise der Reihenabstand in einer Gruppe, was aber durchaus nachteilig sein kann, weil man z. B. in einer nachgeschalteten Kühlanlage den Reihenabstand in der Gruppe möglichst klein haben möchte, um den Raum der Kühlanlage möglichst optimal auszunutzen. Um dieser Forderung gerecht zu werden, ist es dann erforderlich, dem zweiten Förderband ein drittes Förderband nachzuschalten, welches mit geringerer Geschwindigkeit angetrieben wird als das zweite Förderband, so daß sich durch die Übergabe der Reihen von Süßwarenstücken auf das dritte Förderband zwangsweise der Reihenabstand wie auch der Gruppenabstand wieder verringern. Bei dieser bekannten Vorrichtung ist es nicht möglich, Gruppen zu bilden, also einen gewissen Gruppenabstand vorzusehen, ohne dabei den Reihenabstand ebenfalls zu vergrößern. Mit anderen Worten: bei der Gruppenbildung kann der Reihenabstand nicht konstantgehalten werden. Dies hat seine Ursache darin, daß der Schlitten nicht mit unendlich großer Geschwindigkeit, also während der Zeit Null entgegengesetzt zur Förderrichtung zurückbewegt werden kann. Für diese Zurückbewegung des Schlittens ist vielmehr immer eine gewisse Mindestzeit erforderlich. Zusätzlich ist es schwierig, die Geschwindigkeit während der gesamten Wegstrecke der Zurückbewegung des Schlittens konstantzuhalten. In der Regel wird es so sein, daß in der Anfangsphase und in der Endphase der Wegstrecke des Schlittens eine geringere Geschwindigkeit vorliegt als etwa im Mittelbereich. Hierdurch wird der Reihenabstand verändert, und zwar so, daß er in den Endbereichen größer ist als im Mittelbereich. Der Reihenabstand innerhalb einer Gruppe ist damit nicht mehr übereinstimmend.

Die bekannte Vorrichtung weist den weiteren Nachteil auf, daß bei Leistungs- bzw. Geschwindigkeitsschwankungen in der Eintafelanlage, also auch auf dem ersten Förderband, sämtliche nachgeschaltete Aggregate, also das zweite Förderband, die nachfolgenden Förderbänder bis hin zu den Übergabeeinrichtungen zu den Packmaschinen entsprechend geregelt bzw. gesteuert werden müssen. Dies ist äußerst aufwendig, läßt sich jedoch nicht vermeiden, weil bei der bekannten Vorrichtung der Reihenabstand und der Gruppenabstand immer zwangsweise miteinander verknüpft sind. Durch die vielfachen Übergabestellen und auch die wandernde Übergabestelle, bei der zusätzlich noch die Geschwindigkeitsänderung von der ersten zu der zweiten Geschwindigkeit wirksam wird, besteht in hohem Maß die Gefahr, daß die Süßwarenstücke in einer Reihe unregelmäßig ausgerichtet zueinander zu liegen kommen, sich also innerhalb einer Reihe ein gewisser Versatz einstellt, der unerwünscht ist.

Bekannte Beschickungseinrichtungen für Packmaschinen, die innerhalb einer Fertigungsstraße üblicherweise zwischen der hier angesprochenen Fördereinrichtung und den Packmaschinen vorgesehen sind, sind oft so aufgebaut, daß sie mit klappbar ausgebildeten Förderbändern ausgestattet sind, um die betreffende Gruppe von Süßwarenstücken wahlweise auf zwei verschiedene weitere Förderbänder zu übergeben, um die Süßwarenstücke entweder der einen oder der anderen Packmaschine zuzuleiten. Für das Verschwenken dieses klappbaren Förderbands ist eine gewisse Zeitspanne erforderlich, von der ausgehend sich der Gruppenabstand der Süßwarenstücke bestimmt. Der Gruppenabstand muß mindestens so groß sein, daß das klappbare Förderband während der über den Gruppenabstand festgelegten Zeitspanne verschwenkt werden kann. Der Reihenabstand in einer Gruppe kann vorteilhaft relativ klein gewählt sein, um nachgeschaltete Förderbänder, die in der Regel mindestens eine Gruppe aufnehmen müssen, nicht allzu groß bauen zu müssen.

Der Erfindung liegt die Aufgabe zugrunde, reihenweise zugeführte Süßwarenstücke, die auch bereits in Gruppen aufgeteilt vorliegen können, mit einem definierten, meist vergrößerten Gruppenabstand abzusetzen, ohne zwangsweise den Reihenabstand dabei mitverändern zu müssen. Insbesondere soll die Fördervorrichtung in der Lage sein, den Gruppenabstand zu vergrößern, den Reihenabstand jedoch beizubehalten. Dabei soll möglichst ein Versatz der Süßwarenstücke in der Reihe gegeneinander vermieden werden.

Erfindungsgemäß wird dies dadurch erreicht, daß auf dem Schlitten zwischen den beiden Umlenkstellen ein Hilfsförderband vorgesehen ist, welches einen Antrieb aufweist, der auf zwei Hilfsgeschwindigkeiten in Abhängigkeit von der jeweiligen Bewegungsrichtung des Schlittens wechselweise umschaltbar ist. Das Hilfsförderband kann vorteilhaft so betrieben werden, daß es in der einen Bewegungsrichtung des Schlittens, also entgegen der Förderrichtung der Fördereinrichtung, gleichsam Bestandteil bzw. Verlängerung des ersten Förderbands ist, während es bei der anderen Bewegung des Schlittens in der Förderrichtung Bestandteil bzw. Verlängerung des zweiten Förderbands ist. Das Umschalten des Hilfsförderers von der ersten in die zweite Hilfsgeschwindigkeit und umgekehrt geschieht immer nur dann, wenn die betreffende Gruppe von Süßwarenstücken bereits auf dem Hilfsförderband vollständig aufgenommen ist oder das Hilfsförderband vollständig frei von Süßwarenstücken gekommen ist. Damit wird erreicht, daß die Schokoladenstücke an allen Übergangsstellen zwischen den Förderern mit gleicher Geschwindigkeit übergeben werden, also eine sehr sichere Übergabe gewährleistet ist, ohne daß hierbei ein nennenswerter Versatz in der Reihe auftritt. Mit der neuen Fördervorrichtung können sowohl ununterbrochen zugeführte Reihen von Süßwarenstücken als auch bereits Gruppen von Süßwarenstücken behandelt werden. Es ist möglich, die Geschwindigkeit des zweiten Förderbands größer als die Geschwindigkeit des ersten Förderbands zu wählen, um beispielsweise den Gruppenabstand, oder auch zusätzlich noch den Reihenabstand, zu vergrößern. Es ist aber auch möglich, die Geschwindigkeit des zweiten Förderbands geringer als die Geschwindigkeit des ersten Förderbands zu wählen, um eine Verdichtung der Süßwarenstücke zu erreichen.

Die neue Fördervorrichtung erbringt auch den überraschenden Vorteil, daß auch bei wechselnden Geschwindigkeiten eines Zufuhrbands, einer Eintafelanlage oder auch auf dem ersten Förderband konstante Verhältnisse auf dem zweiten Förderband auftreten, nämlich insoweit, als der Reihenabstand in der Gruppe erhalten bleibt und lediglich der Gruppenabstand, also der Abstand von Gruppe zu Gruppe, verändert wird. Läuft das erste Förderband beispielsweise langsamer, um irgendwelche Störungen in der Gesamtanlage auszuregeln, dann kann die Fördervorrichtung so betrieben werden, daß der Reihenabstand konstant bleibt und sich lediglich der Gruppenabstand vergrößert. Diese Vergrößerung des Gruppenabstands ist aber in keiner Weise nachteilig, weil die nachgeschalteten Beschickungseinrichtungen für die Packmaschine insoweit unabhängig von dem Gruppenabstand arbeiten, d. h. ein sich vergrößernder Gruppenabstand wirkt sich auf die Beschickungseinrichtungen nicht nachteilig aus. Besonders erstaunlich ist dabei, daß bei solchen variierenden Geschwindigkeiten der vorangehenden Förderbänder oder -einrichtungen eine Regelung der Beschickungseinrichtungen zur Packmaschine nicht mehr erforderlich ist bzw. ganz in Fortfall kommt. Hierdurch vereinfacht sich die gesamte Anlage hinsichtlich ihres Steuer- und Regelaufwands ganz erheblich.

Mit der neuen Fördervorrichtung ist noch ein weiterer Vorteil verknüpft. Es besteht keine Abhängigkeit mehr zwischen dem Reihenabstand in einer Gruppe und der Geschwindigkeit bzw. dem Geschwindigkeitsverlauf, mit dem der Schlitten zurückbewegt wird. Diese Unabhängigkeit von der Geschwindigkeit der Bewegung des Schlittens hat ihre Ursache darin, daß während der Rückbewegung das Hilfsförderband mit der Geschwindigkeit angetrieben werden kann, die auch der erste Förderer aufweist, so daß insoweit keine Differenzen im Reihenabstand einer Gruppe entstehen. Wenn der Hilfsförderer mit exakt der gleichen Geschwindigkeit angetrieben wird wie der erste Förderer, und zwar während der Rückwärtsbewegung des Schlittens, dann spielt es keine Rolle, ob diese Rückwärtsbewegung gleichförmig oder ungleichförmig bzw. in welcher Zeit sie durchgeführt wird. Die Reihenabstände bleiben auf jeden Fall konstant. Wenn es dagegen so ist, daß der Hilfsförderer mit einer etwas anderen Geschwindigkeit angetrieben wird als der erste Förderer, dann ist es erforderlich, die Bewegung des Schlittens und des Hilfsförderers entgegengesetzt zur Förderrichtung möglichst gleichförmig durchzuführen. Da aber die Notwendigkeit, diese Rückbewegung möglichst schnell durchzuführen, entfallen ist und somit ausreichend Zeit zur Verfügung steht, ist es vergleichsweise sehr viel einfacher, hier eine gleichförmige Rückbewegung zu erzielen.

Bei Bewegung des Schlittens entgegen der Förderrichtung kann das Hilfsförderband mit einer der ersten Geschwindigkeit des ersten Förderbands entsprechenden Hilfsgeschwindigkeit und bei Bewegung des Schlittens in Förderrichtung mit einer der zweiten Geschwindigkeit des zweiten Förderbands entsprechenden Hilfsgeschwindigkeit angetrieben sein. In diesem Fall bleibt der Reihenabstand erhalten und es wird lediglich der Gruppenabstand verändert, in der Regel vergrößert. Der Reihenabstand ist auch unabhängig davon, ob die Rückbewegung schnell oder langsam durchgeführt wird.

Der Antrieb des Schlittens für seine hin- und hergehende Bewegung kann mit dem Reihenabstand auf dem ersten Förderband oder einem weiteren, noch vorgeschalteten Förderband synchronisiert sein. Diese Synchronisation kann in verschiedern Weise erfolgen, beispielsweise durch entsprechende getriebliche Verbindung miteinander oder aber auch über eine Steuereinrichtung mit Lichtschranken, der Ansteuerung entsprechender Elektromotore u. dgl.

Zur Bildung von Gruppen, also bei reihenweise herangeführten Süßwarenstücken oder zur Veränderung des Gruppenabstands bei bereits gruppenförmig unterteilten Süßwarenstücken kann das Hilfsförderband eine die Aufnahme einer kompletten Gruppe von Süßwarenstücken oder einem ganzzahligen Vielfachen davon gestattende Länge im fördernden Trum aufweisen. In der Regel muß das fördernde Trum des Hilfsförderbands nur eine komplette Gruppe von Süßwarenstücken aufnehmen können, so daß der Gruppenabstand, also der Abstand von Gruppe zu Gruppe, jeweils konstant ist. Wenn dagegen beispielsweise zwei Gruppen gleichzeitig auf dem Hilfsförderband abgesetzt werden, entstehen zwei verschiedene Gruppenabstände.

Für die hin- und hergehende Bewegung des Schlittens mit dem Hilfsförderband kann ein Kurventrieb, ein reversierend steuerbarer Motor o. dgl. vorgesehen sein. Es ist möglich, die Aufteilung der Zeitspanne, die für eine hin- und hergehende Bewegung zur Verfügung steht, in unterschiedlicher Weise auf die Rückbewegung und die Vorwärtsbewegung des Schlittens mit dem Hilfsförderband aufzuteilen, je nach dem gewünschten Ergebnis. Es besteht beispielsweise die Möglichkeit, unter Beachtung der Förderrichtung und der Geschwindigkeit des ersten Förderers eine solche Aufteilung zu wählen, daß die Massen des Schlittens und des Hilfsförderers nur vergleichsweise wenig beschleunigt werden müssen. Mit anderen Worten kann der Schlitten und das Hilfsförderband vorteilhaft mit nicht allzu hohen Geschwindigkeit hin- oder herbewegt werden.

Das erfindungsgemäße Verfahren zum Fördern von in Reihen nebeneinander quer zur Förderrichtung liegenden Süßwarenstücken und zum Einstellen eines Gruppenabstands geht davon aus, daß die Süßwarenstücke reihenweise von einem ersten, mit einer ersten Geschwindigkeit angetriebenen Förderband auf ein zweites, mit einer zweiten Geschwindigkeit angetriebenen Förderband übergeben werden. Durch die Geschwindigkeitsdifferenz bei der Übergabe gibt es im Stand der Technik durch unregelmäßige Formgebung des Bodens der Süßwarenstücke und durch unterschiedliche Ausbildung der Übergabestellen einen Reihenversatz, der sich störend auf die nachgeschalteten Maschinen auswirkt. Um diesen Reihenversatz auszuschließen und trotzdem den Gruppenabstand zu ändern, wobei der Reihenabstand beispielsweise konstantgehalten werden soll, ist erfindungsgemäß vorgesehen, daß die Reihen von dem ersten Förderband zunächst auf ein Hilfsförderband übergeben werden, wobei das Hilfsförderband während der Übergabe mit der Geschwindigkeit des ersten Förderbands angetrieben wird. Nach beendeter Übergabe der Gruppe auf das Hilfsförderband wird dieses mit der Geschwindigkeit des zweiten Förderbands angetrieben; diese Geschwindigkeit wird auch während der Übergabe der Gruppe auf das zweite Förderband beibehalten. Damit ist sichergestellt, daß an jeder Übergabestelle die Übergabe der Süßwarenstücke nur unter übereinstimmender Geschwindigkeit zwischen dem abgebenden und dem aufnehmenden Förderband erfolgt. Da also die Geschwindigkeit an der Übergabestelle in diesem Moment nicht geändert wird, sondern konstant ist und übereinstimmt, entsteht kein Reihenversatz. Andererseits erfolgt das Umschalten der Geschwindigkeit des Hilfsförderbands von der Geschwindigkeit des ersten Förderbands auf die Geschwindigkeit des zweiten Förderbands nur und erst dann, wenn eine vollständige Gruppe von Süßwarenstücken sich auf dem Hilfsförderband befindet bzw. dann, wenn das Hilfsförderband völlig frei von einer Gruppe Süßwarenstücke gekommen ist.

Das Hilfsförderband wird während der Aufnahme der Gruppe entgegen und während der Abgabe der Gruppe in Förderrichtung hin- und herbewegt. Dies ist dann von Vorteil, wenn auf dem ersten Förderband die Süßwarenstücke mit kleinem Gruppenabstand oder sogar in ununterbrochener Folge Reihe auf Reihe, also mit einem Gruppenabstand, der dem Reihenabstand entspricht, anfallen und trotzdem keine allzu großen Geschwindigkeitsunterschiede zwischen dem Antrieb des ersten Förderbands und dem Antrieb des zweiten Förderbands und keine allzu großen Gruppenabstände erzeugt werden soll, wie dies in vielen Fällen gefordert wird. Besondere Bedeutung kommt diesem Merkmal in Verbindung mit den unterschiedlichen Antriebsgeschwindigkeiten des Hilfsförderbands zu.

Zur Variation des Gruppenabstands kann der Verhältnis der Zeiten des entgegen der Förderrichtung bewegten Hilfsförderbands und des in Förderrichtung bewegten Hilfsförderbands verändert werden. Damit ist es möglich, Süßwarenstücke unterschiedlicher Art auf unterschiedliche Weise in ein und derselben Anlage zu behandeln. Die Zeitaufteilung kann je nach Zweckmäßigkeit gewählt werden, wobei sich hieraus dann die von dem Hilfsförderband zurückzulegenden Wege ergeben.

Auch bei sich ändernder Geschwindigkeit des ersten Förderbands kann die Geschwindigkeit des zweiten Förderbands konstantgehalten werden. Oft kommt es vor, daß sich die Austrittsgeschwindigkeit der Süßwarenstücke aus der Eintafelanlage ändert. Die Geschwindigkeit, mit der das erste Förderband angetrieben wird, wird in der Regel von der Austrittsgeschwindigkeit bzw. Arbeitsgeschwindigkeit der Eintafelanlage abgeleitet; sie ist mit dieser synchronisiert. Beim Stand der Technik ist es nun erforderlich, auch die Geschwindigkeit, mit der das zweite Förderband angetrieben wird, in Abhängigkeit von der Arbeitsgeschwindigkeit der Eintafelanlage zu synchronisieren. Diese Synchronisation muß sämtliche nachgeschalteten Förderbänder und Behandlungsmaschinen, Verpackungsmaschinen u. dgl. umfassen. Erst mit dem erfindungsgemäßen Verfahren ist es möglich, die Geschwindigkeit, mit der das zweite Förderband angetrieben wird, ohne Synchronisation frei zu wählen, um festzulegen, daß auch bei einer Maximalgeschwindigkeit des ersten Förderbands ein minimaler Gruppenabstand auf dem zweiten Förderband erreicht wird, der zum Betrieb der Weiterverarbeitungsanlagen ausreicht. Wenn dann infolge von Schwankungen in der Arbeitsgeschwindigkeit der Eintafelanlage die Geschwindigkeit, mit der das erste Förderband angetrieben wird, sinkt oder sich verändert, so äußert sich dies nur in einer relativen Vergrößerung des Gruppenabstands, während der Reihenabstand konstant bleibt. Eine Vergrößerung des Gruppenabstands über einen Minimal-Gruppenabstand hinaus ist aber für die nachgeschalteten Maschinen in der Regel unschädlich.

Die Geschwindigkeiten des Antriebs des Hilfsförderbands werden mit den Geschwindigkeiten des ersten und des zweiten Förderbands synchronisiert, damit bei jeder Übergabe der Süßwarenstücke an der Übergabestelle identische Geschwindigkeiten vorliegen. Durch die Wahl der Zeiten, über die die erste bzw. zweite Geschwindigkeit aufrechterhalten bleiben, kann auf den Gruppenabstand im Sinne einer Veränderung und bei Konstanthaltung des Reihenabstands Einfluß genommen werden.

Die Erfindung wird anhand schematischer Darstellungen in den beiliegenden Zeichnungen verdeutlicht. Es zeigen:
- Figur 1: einen Ausschnitt aus einer Draufsicht von Süßwarenstücken auf einem Förderband,
- Figur 2: eine schematische Seitenansicht der Fördervorrichtung mit der Darstellung des Hlfsförderbands in vorderster Position,
- Figur 3: eine schematische Seitenansicht der Förderrichtung mit der Darstellung des Hilfsförderbands in hinterster Position,
- Figur 4: eine schematische Darstellung der wesentlichen Teile der Fördervorrichtung mit zwei Förderzuständen ähnlich der Darstellung der Figuren 2 und 3 in bestimmter zeitmäßiger Aufteilung und
- Figur 5: eine ähnliche Darstellung wie Figur 4, jedoch bei anderer zeitmäßiger Aufteilung.

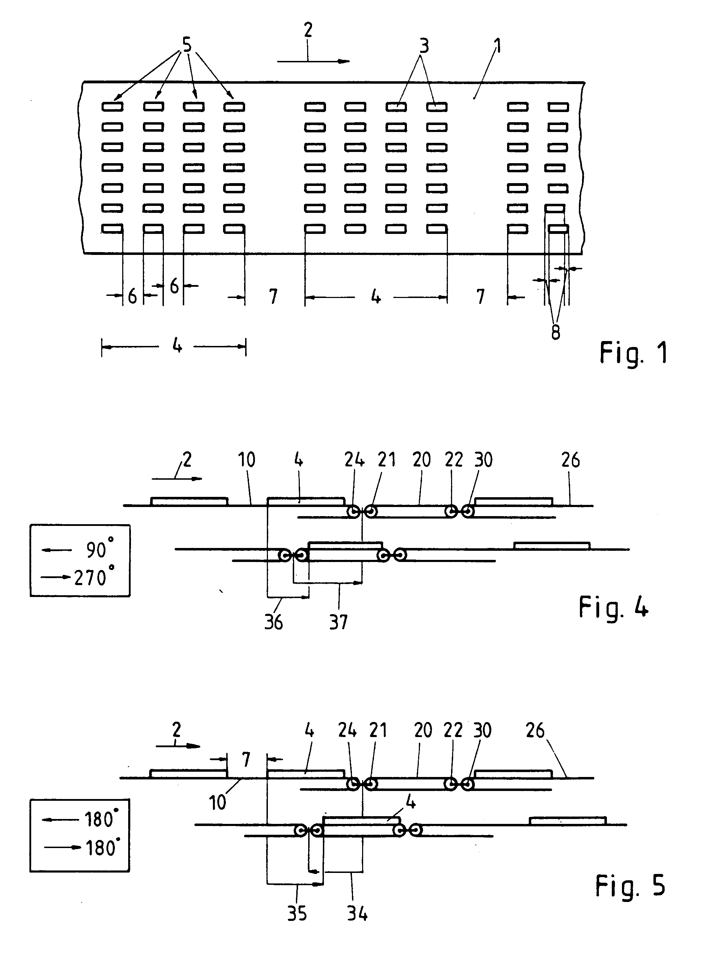

Figur 1 zeigt die Draufsicht auf einen Ausschnitt eines Förderbands 1, welches in einer Förderrichtung 2 gemäß der Pfeilangabe bewegt werden möge. Auf diesem Förderband 1 liegen Süßwarenstücke 3 in bestimmter feldmäßiger Anordnung vor, und zwar sind hier Gruppen 4 von Süßwarenstücken 3 gebildet, wobei jede Gruppe 4 vier Reihen 5 von nebeneinanderliegenden Süßwarenstücken 3 aufweisen möge. Jede Reihe 5 besteht aus sieben nebeneinanderliegenden Süßwarenstücken 3. Zwischen benachbarten Reihen 5 in einer Gruppe 4 ergibt sich ein Reihenabstand 6, während zwischen der letzten Reihe 5 einer vorangehenden Gruppe 4 und der ersten Reihe 5 einer nachfolgenden Gruppe 4 ein Gruppenabstand 7 gebildet ist. Die Figur 1 dient zur Erläuterung dieser Begriffe und veranschaulicht die Anordnung von Süßwarenstücken 3, wie sie auf den verschiedensten Förderbändern 1 einer Anlage vorliegen können. Es ist leicht vorstellbar, daß der Reihenabstand 6 auch mit dem Gruppenabstand 7 übereinstimmen kann; in einem solchen Fall sind die Gruppen 4 nicht mehr unterscheidbar, sondern die Reihen 5 treten aus einer Eintafelanlage oder einer sonstigen Vorrichtung jeweils nur unter Einhaltung dieses Reihenabstands 6 hintereinander aus. Wenn die Süßwarenstücke 3 in der Reihe 5 quer zur Förderrichtung 2 nicht fluchtend angeordnet sind, so liegt hier ein Reihenversatz 8 vor. Dieser Reihenversatz 8 ist das Maß, um welches die vorderen oder hinteren Enden der Süßwarenstücke 3 gegeneinander in der Reihe differieren, und zwar in Förderrichtung 2 gemessen.

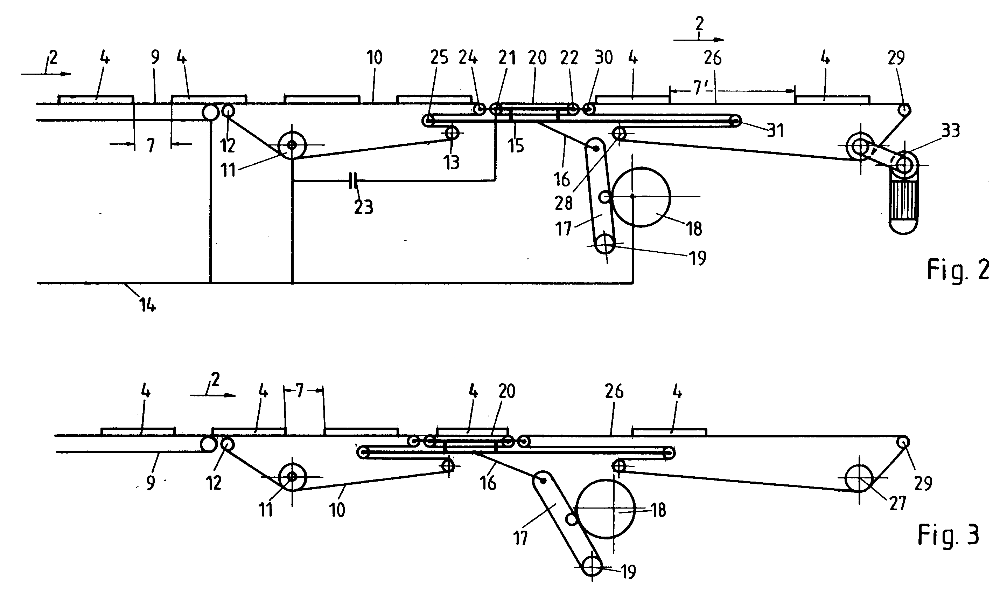

In Figur 2 ist die Fördervorrichtung mit ihren wesentlichen Teilen schematisch verdeutlicht. Aus einer nicht dargestellten Eintafelanlage mögen Gruppen 4 von Süßwarenstücken mit dem Gruppenabstand 7 austreten. Die Fördervorrichtung, die diesem Förderband 9 in Förderrichtung nachgeschaltet ist, weist ein erstes Förderband 10 auf, welches mit einer ersten Geschwindigkeit v₁ angetrieben wird. Das Förderband 10 ist um eine Antriebsrolle 11 und zwei ortsfest angeordnete Umlenkrollen 12 und 13 herumgeführt. Der Antrieb gelangt über einen nur schematisch dargestellten Antriebsstrang 14 einmal zu der Antriebsrolle 11 des Förderbands 10 und zum anderen zu dem Förderband 9, so daß die beiden Förderbänder 9 und 10 jeweils mit identischer Geschwindigkeit angetrieben werden, die jedoch in Abhängigkeit von der variablen Arbeitsgeschwindigkeit der Eintafelanlage sich während des Betriebs verändern kann.

Dem Ende des Förderbands 10 ist ein Schlitten 15 zugeordnet, der in Förderrichtung 2 sowie entgegengesetzt dazu verschieblich gelagert ist, so daß er eine hin- und hergehende Bewegung ausführen kann. Für diese Bewegung ist ein Koppeltrieb vorgesehen, der Hebel 16 und 17 sowie eine Kurvenscheibe 18, die exzentrisch gelagert ist, aufweist. Der Hebel 17 ist um ein ortsfestes Lager 19 schwenkbar. Er ist so geführt, daß seine Schwenkbewegung von der jeweiligen Stellung der Kurvenscheibe 18, an der er anliegt, bestimmt wird. Mit dem freien Ende des Hebels 17 ist der Hebel 16 gelenkig verbunden, der andererseits an dem Schlitten 15 angreift. Über den Antriebsstrang 14 wird auch die Kurvenscheibe 18 angetrieben, so daß damit die hin- und hergehende Bewegung des Schlittens 15 mit der Arbeitsgeschwindigkeit der Eintafelanlage bzw. der Geschwindigkeit v₁ des ersten Förderbands 10 synchronisiert ist. Auf dem Schlitten 15 ist ein Hilfsförderband 20 um zwei Rollen 21 und 22 geführt, welches antreibbar ist und dessen Antrieb auf mindestens zwei Geschwindigkeiten umschaltbar ist. So kann beispielsweise über eine schematisch angedeutete Kupplung 23 der Antrieb des Hilfsförderbands 20 von der Antriebsrolle 11 bzw. dem Antriebsstrang 14 abgegriffen werden. Auf dem Schlitten 15 sind zwei weitere Umlenkrollen 24 und 25 gelagert, um die das Förderband 10 in der dargestellten Schlaufenbildung herumgelegt ist, so daß sich am Übergang zwischen der Umlenkrolle 24 und der Rolle 21 eine wandernde Übergabestelle von dem Förderband 10 auf das Hilfsförderband 20 ergibt, wenn der Schlitten 15 hin- und hergehend angetrieben wird. Dabei bleibt die ausnutzbare Länge des Hilfsförderbands 20 konstant, während sich die ausnutzbare Länge des Förderbands 10 verkürzt bzw. verlängert.

Dem Hilfsförderband 20 ist ein zweites Förderband 26 nachgeordnet, welches über eine Antriebsrolle 27 und zwei ortsfeste Umlenkrollen 28 und 29 herumgeführt ist. Auch hier weist der Schlitten 15 zwei auf ihm gelagerten Umlenkrollen 30 und 31 auf, über die das Förderband 26 unter Schlaufenbildung herumgelegt ist. Damit tritt zwischen dem Hilfsförderband 20 und dem Förderband 26 eine weitere wandernde Übergabestelle zwischen der Rolle 22 und der Umlenkrolle 30 auf. Es versteht sich, daß die in der Förderebene angeordneten Rollen auch als Umlenkkanten ausgebildet sein können, um die freie Strecke im Bereich der Übergabestellen möglichst klein gestalten zu können. Das zweite Förderband 26 wird mit einer Geschwindigkeit v₂ angetrieben, die größer ist als die Geschwindigkeit v₁ des ersten Förderbands 10. Für den Antrieb des zweiten Förderbands 26 kann ein Motor 32 und eine Übersetzungsstufe 33 vorgesehen sein, so daß hier der Antrieb auf die Antriebsrolle 27 übertragen wird. Vorteilhaft kann die Geschwindigkeit v₂ des zweiten Förderbands 26 während des Betriebs konstantgehalten werden, und zwar auch bei während des Arbeitsprozesses schwankender Geschwindigkeit v₁. Während die Gruppen 4 auf den Förderbändern 9 und 10 einen Gruppenabstand 7 aufweisen bzw. aufweisen können, der auch dem Reihenabstand 6 entsprechen kann, liegt auf dem zweiten Förderband 26 ein vergleichsweise größerer Gruppenabstand 7′ vor, während der hier nicht dargestellte Reihenabstand 6 in jeder Gruppe 4 konstant ist. Dies bedeutet, daß die Gruppe 4 als Gruppe beim Durchlauf durch die Fördereinrichtung unverändert beieinandergehalten wird.

Die Figur 2 möge den vordersten Umkehrpunkt des Schlittens 15 darstellen, also eine Stellung, in welcher das erste Förderband 10 seine größte und das zweite Förderband 26 seine kleinste ausnutzbare Länge aufweisen. Wichtig ist, zu erkennen, daß das Hilfsförderband 20 frei von Gruppen 4 bzw. Süßwarenstücken 3 ist, wobei die letzte Gruppe 4 bereits auf das zweite Förderband 26 übergetreten ist. Figur 3 zeigt dagegen den hintersten Umkehrpunkt des Schlittens 15, wenn also beispielsweise die Kurvenscheibe 18 um 180° weitergedreht hat, so daß jetzt das erste Förderband 10 seine kleinste und das Förderband 26 seine größte Länge aufweisen. Während dieser Rückwärtsbewegung des Schlittens 15, rückwärts bzw. entgegengesetzt zu der Förderrichtung 2, wird das Hilfsförderband 20 beispielsweise über die Kupplung 23 mit der Geschwindigkeit v₁ des ersten Förderbands in Förderrichtung 2 umlaufend angetrieben, und zwar für eine solche Zeitspanne, die ausreicht, damit die nachfolgende Gruppe 4 vollständig von dem ersten Förderband 10 auf das Hilfsförderband 20 gelangt. Da das Förderband 10 und das Hilfsförderband 20 auch im Bereich der Umlenkrollen 24 und 21 mit übereinstimmender Geschwindigkeit angetrieben werden, entsteht beim Übergang der Süßwarenstücke 3 in der Gruppe 4 auf das Hilfsförderband 20 weder ein Reihenversatz 8 noch eine Änderung des Reihenabstands 6 oder des Gruppenabstands 7. der Beginn des Antriebs des Hilfsförderbands 20 mit der Geschwindigkeit v₁ muß nicht unbedingt im Umkehrpunkt der Hin- und Herbewegung des Schlittens 15 beginnen. Zweckmäßig sollte er jedoch in etwa und nicht viel später beginnen als die Rückwärtsbewegung des Schlittens 15. Analoges gilt für die Beendigung des Antriebs des Hilfsförderbands 20 mit der Geschwindigkeit v₁. Während dieser Bewegung, also am Übergang zwischen den Figuren 2 und 3, bewegen sich die Gruppen 4 auf dem ersten Förderband 10 in Förderrichtung, während der Schlitten 15 sich dieser Richtung entgegen bewegt. Man erkennt, daß zur vollständigen Übergabe der Gruppe 4 auf das Hilfsförderband 20 nur ein vergleichsweise kleinerer Weg des Schlittens 15 im Vergleich zur Länge der Gruppe 4 zurückgelegt werden muß. Dieser Rückwärtsbewegung des Schlittens 15 entgegen der Förderrichtung 2 möge beispielsweise die Hälfte der Kurvenscheibe 18, also 180°, zugeordnet sein. Damit liegt fest, daß die andere Hälfte, also weitere 180° der Kurvenscheibe 18, für die Bewegung des Schlittens 15 in Förderrichtung 2 ausgebildet ist. Dieser Übergang ergibt sich nun wiederum durch Vergleich des Übergangs zwischen der Darstellung der Figur 3 und der Figur 2. Während sich der Schlitten 15 in Förderrichtung 2 bewegt, wird auch hier für eine gewisse Zeitspanne das Hilfsförderband 20 in Förderrichtung 2 angetrieben, jedoch jetzt mit der Geschwindigkeit v₂ des zweiten Förderbands 26, damit die Übergabe der Süßwarenstücke 3 über die Umlenkrollen 22 und 30 ebenfalls ohne Reihenversatz 8 stattfindet. Dadurch jedoch, daß die auf dem Hilfsförderband 20 liegende Gruppe 4 nun plötzlich mit einer größeren Geschwindigkeit v₂ nach rechts bewegt, als die nächstfolgende Gruppe 4 auf dem Förderband 10 nachfolgen kann, wird der Gruppenabstand 7 in den Gruppenabstand 7′ vergrößert, ohne daß sich der Reihenabstand 6 ändert. Da die Geschwindigkeit v₂ des zweiten Förderbands 26 weitgehend frei wählbar ist, ist damit auch der erreichbare Gruppenabstand 7′ festlegbar. Die Geschwindigkeit v₂ wird vorzugsweise konstantgehalten für einen Anwendungsfall. Wenn eine maximal zulässige Geschwindigkeit v₁ₘₐₓ des Förderbands 10 festgelegt ist, ergibt sich hier ein Minimalgruppenabstand 7′, der somit auf keinen Fall unterschritten wird. Ändert sich während des Betriebs der Eintafelanlage die Geschwindigkeit v₁, dann ändert sich auf der Gruppenabstand 7′, und zwar derart, daß bei einer Verringerung der Geschwindigkeit v₁ gegenüber v₁ₘₐₓ der Gruppenabstand 7′ vergrößert wird und damit auf jeden Fall größer bleibt als ein Minimalgruppenabstand 7′. Dieser Minimalgruppenabstand 7′ ist so gewählt, wie es die möglicherweise nachgeschalteten Bearbeitungs- und Verpackungsanlagen und Förderbänder, die dem Förderband 2 nachgeschaltet sind, erfordern. Insoweit stört die Vergrößerung eines Gruppenabstands 7′ bei sich verringernder Geschwindigkeit v₁ nicht, weil auch hier der Reihenabstand konstant bleibt, also das Erscheinungsbild der Gruppen 4 dabei nicht verändert wird. Besonders vorteilhaft ist es, daß der Antrieb des zweiten Förderbands 26 (sowie der Antrieb sämtlicher nachgeschalteter Förderbänder und Anlagen) nicht mit dem Antriebsstrang 14 für die Geschwindigkeit v₁ synchronisiert werden muß. Es entfällt hier ein erheblicher Aufwand an Steuerungsanlagen. Sicherlich muß auf irgendeinem Wege der Antrieb des Hilfsförderbands 20 während der Vorwärtsbewegung des Schlittens 15 mit der Geschwindigkeit v₂ des zweiten Förderbands 26 synchronisierbar sein. Hier stehen dem Fachmann jedoch entsprechende Mittel zur Verfügung, beispielsweise eine Synchronisation auf elektrischem Wege.

Die Verhältnisse unter Aufteilung der Kurvenscheibe 18 in 180° für die Rückwärtsbewegung des Schlittens 15 und in 180° für die Vorwärtsbewegung des Schlittens 15, wie sie anhand der Figuren 2 und 3 beschrieben wurde, ist schematisiert noch einmal in Figur 5 dargestellt, wobei die Förderbänder 10 und 26 sowie das Hilfsförderband 20 noch weiter vereinfacht dargestellt sind. Die obere Darstellung entspricht prinzipiell der Anordnung gemäß Figur 2, während die untere Darstellung die Stellung gemäß Figur 3 wiedergibt. In der oberen Darstellung ist das Hilfsförderband 20 leer. Am Übergang zu der unteren Darstellung ist das Hilfsförderband um einen Weg 34 nach rückwärts, also entgegen der Förderrichtung 2 der Fördereinrichtung gefahren, während sich gleichzeitig das hintere Ende der Süßwarenstücke 3 der letzten Reihe 5 der Gruppe 4 um den Weg 35 in Förderrichtung 2 bewegt hat. Wie ersichtlich, ist damit die gesamte Gruppe 4 der Süßwarenstücke 3 auf das Hilfsförderband 20 übergetreten, ohne daß sich der Reihenabstand 6 oder der Gruppenabstand 7 verändert hätten. Es ist ersichtlich, daß die Wege 34 und 35 in ähnlicher Größenordnung liegen. Man erkennt auch, daß genügend Zeit zur Verfügung steht, um einmal während der Rückwärtsbewegung des Schlittens 15 mit dem Hilfsförderband 20 die Möglichkeit besteht, die komplette Gruppe 4 zu übernehmen. Andererseits steht ausreichend Zeit zur Verfügung, um eine komplette Gruppe 4 von dem Hilfsförderband 20 auf das zweite Förderband 26 abzugeben. Durch Variation der Einschaltzeiten, mit denen die beiden Geschwindigkeiten v₁ und v₂ an dem Hilfsförderband 20 zur Einwirkung gelangen, kann auf die Größe des Gruppenabstands 7 bzw. 7′ Einfluß genommen werden.

Figur 4 verdeutlicht eine andere Möglichkeit der Aufteilung des Umfangs der Kurvenscheibe 18. Hierbei ist nur 90° der Kurvenscheibe 18, also 1/4 des Umfangs, der Rückwärtsbewegung des Schlittens 15 entgegen der Förderrichtung 2 zugeordnet. Da hier nur eine vergleichsweise kürzere Zeitspanne für die Rückwärtsbewegung des Schlittens 15 zur Verfügung steht, andererseits aber in dieser kürzeren Zeitspanne die Gruppe 4 auf dem Förderband 10 nur einen kleineren Weg 36 zurücklegen kann, muß die Rückwärtsbewegung des Schlittens 15 über einen größeren Weg 37 und somit schneller erfolgen. In etwa kann hier der Weg 35 gemäß Figur 5 als doppelt so groß wie der Weg 36 in Figur 4 angesehen werden, vorausgesetzt, die Geschwindigkeiten v₁ in den Figuren 4 und 5 stimmen überein. Der Vorteil der Ausbildungsform gemäß Figur 4 besteht darin, daß für die Vorwärtsbewegung des Schlittens 15 etwa 270° des Umfangs der Kurvenscheibe 18 zur Verfügung stehen, so daß eine sehr große Zeitspanne gegeben ist, um die Übergabe der Gruppe 4 der Süßwarenstücke 3 auf das Förderband 26 sicherzustellen. Damit ist verdeutlicht, daß die Aufteilung der Ausnutzung des Umfangs der Kurvenscheibe 18 und die Aufteilung auf die hin- und hergehende Bewegung des Schlittens 15 je nach Anwendungsfall optimal günstig gewählt werden kann. Man erkennt auch, daß durch einfachen Austausch der Kurvenscheibe 18 durch eine Kurvenscheibe 18 mit anderer Umfangsgestaltung eine Umstellung der Fördereinrichtung auf andere Verhältnisse möglich ist. Darüberhinaus kann natürlich auch bei verschiedenen Anlagen die Geschwindigkeit v₂ anders und in Abstimmung auf die Geschwindigkeit v₁ gewählt werden.

## Patentansprüche

1. Fördervorrichtung mit einem ersten, mit einer ersten Geschwindigkeit v₁ angetriebenen Förderband (10), auf welchem Süßwarenstücke (3) reihenweise in sich quer zur Förderrichtung (2) erstreckenden Reihen (5) mit einem ersten Reihenabstand (6) herangeführt werden, mit einem zweiten, mit einer von der ersten Geschwindigkeit verschiedenen zweiten Geschwindigkeit v₂ angetriebenen Förderband (26), auf das die Reihen (5) von Süßwarenstücken (3) mit einem zweiten, vom ersten Reihenabstand (7) verschiedenen Reihenabstand (7′) abgesetzt werden, wobei die einander zugekehrten Umlenkstellen (24, 30) des ersten und des zweiten Förderbands (10, 26) auf einem hin- und herbeweglich angetriebenen Schlitten (15) angeordnet sind und eine wandernde Übergabestelle bilden, dadurch gekennzeichnet, daß auf dem Schlitten (15) zwischen den beiden Umlenkstellen (24, 30) ein Hilfsförderband (20) vorgesehen ist, welches einen Antrieb aufweist, der auf zwei Hilfsgeschwindigkeiten in Abhängigkeit von der jeweiligen Bewegungsrichtung des Schlittens (15) wechselweise umschaltbar ist.

2. Fördervorrichtung nach Anspruch 1, dadurch gekennzeichnet, daß bei Bewegung des Schlittens (15) entgegen der Förderrichtung (2) das Hilfsförderband (20) mit einer der ersten Geschwindigkeit v₁ des ersten Förderbands (10) entsprechenden Hilfsgeschwindigkeit und bei Bewegung des Schlittens (15) in Förderrichtung (2) mit einer der zweiten Geschwindigkeit v₂ des zweiten Förderbands (26) entsprechenden Hilfsgeschwindigkeit angetrieben ist.

3. Fördervorrichtung nach Anspruch 1 oder 2, dadurch gekennzeichnet, daß der Antrieb des Schlittens (15) für seine hin- und hergehende Bewegung mit dem Reihenabstand (6) auf dem ersten Förderband (10) oder einem weiteren, noch vorgeschalteten Förderband (9) synchronisiert ist.

4. Fördervorrichtung nach einem oder mehreren der Ansprüche 1 bis 3, dadurch gekennzeichnet, daß zur Bildung von Gruppen (4) oder zur Veränderung des Gruppenabstands (7) das Hilfsförderband (20) eine die Aufnahme einer kompletten Gruppe (4) von Süßwarenstücken (3) oder einem ganzzahligen Vielfachen davon gestattende Länge im fördernden Trum aufweist.

5. Fördervorrichtung nach einem oder mehreren der Ansprüche 1 bis 4, dadurch gekennzeichnet, daß für die hin- und hergehende Bewegung des Schlittens (15) mit dem Hilfsförderband (20) ein Kurventrieb (16, 19), ein reversierend steuerbarer Motor o. dgl. vorgesehen ist.

6. Verfahren zum Fördern von in Reihen (5) nebeneinander quer zur Förderrichtung (2) liegenden Süßwarenstücken (3) und zum Einstellen eines Gruppenabstands (7′), in dem die Süßwarenstücke (3) reihenweise von einem ersten, mit einer ersten Geschwindigkeit v₁ angetriebenen Förderband (10) auf ein zweites, mit einer zweiten Geschwindigkeit v₂ angetriebenes Förderband (26) übergeben werden, dadurch gekennzeichnet, daß die Reihen (5) von dem ersten Förderband (10) zunächst auf ein Hilfsförderband (20) übergeben werden, wobei das Hilfsförderband während der Übergabe mit der Geschwindigkeit v₁ des ersten Förderbands (10) angetrieben wird, daß nach beendeter Übergabe der Gruppe (4) auf das Hilfsförderband (20) das Hilfsförderband mit der Geschwindigkeit v₂ des zweiten Förderbands (26) angetrieben wird und während der Übergabe der Gruppe (4) auf das zweite Förderband (269 beibehalten wird.

7. Verfahren nach Anspruch 6, dadurch gekennzeichnet, daß das Hilfsförderband (20) während der Aufnahme der Gruppe (4) entgegen und während der Abgabe der Gruppe in Förderrichtung (2) hin- und herbewegt wird.

8. Verfahren nach Anspruch 6 und 7, dadurch gekennzeichnet, daß zur Variation des Gruppenabstands (7′) das Verhältnis der Zeiten des entgegen der Förderrichtung (2) bewegten Hilfsförderbands (20) und des in Förderrichtung (2) bewegten Hilfsförderbands verändert wird.

9. Verfahren nach Anspruch 6 bis 8, dadurch gekennzeichnet, daß auch bei sich ändernder Geschwindigkeit v₁ des ersten Förderbands (10) die Geschwindigkeit v₂ des zweiten Förderbands (26) konstantgehalten wird.

10. Verfahren nach Anspruch 9, dadurch gekennzeichnet, daß die Geschwindigkeiten des Antriebs des Hilfsförderbands (20) mit den Geschwindigkeiten v₁ und v₂ des ersten und des zweiten Förderbands (10, 26) synchronisiert werden.

## Claims

1. Conveying device with a first conveyor belt (10), which is driven at a first speed v₁ and on which confectionery pieces (3) are brought forward row by row in rows (5), which extend transversely to the conveying direction (2) and are at a first row spacing (6), with a second conveyor belt (26), which is driven at a second speed v₂ differing from the first speed and onto which the rows (5) of confectionery pieces (3) are deposited at a second row spacing (7') differing from the first row spacing (7), wherein the mutually facing reversal points (24, 30) of the first and second conveyor belt (10, 26) are arranged on a carriage (15), which is driven to be movable to and fro, and form a wandering transfer point, characterised thereby, that an auxiliary conveyor belt (20) is provided on the carriage (15) between both the reversal points (24, 30) and displays a drive which is switchable alternatively to two auxiliary speeds in dependence on the respective direction of movement of the carriage (15).

2. Conveying device according to claim 1, characterised thereby, that in the case of movement of the carriage (15) opposite to the conveying direction (2), the auxiliary conveyor belt (20) is driven at an auxiliary speed corresponding to the first speed V₁ of the first conveyor belt (10) and, in the case of movement of the carriage (15) in the conveying direction (2), the auxiliary conveyor belt (20) is driven at an auxiliary speed corresponding to the second speed v₂ of the second conveyor belt (26).

3. Conveyor device according to claim 1 or 2, characterised thereby, that the drive of the carriage (15) for its reciprocating movement is synchronised with the row spacing (6) on the first conveyor belt (10) or a further conveyor belt (9) still connected upstream.

4. Conveying device according to one or more of the claims 1 to 3, characterised thereby, that for the formation of groups (4) or for the variation of the group spacing (7), the auxiliary conveyor belt (20) displays a length, which permits the reception of a complete group (4) of confectionery pieces (3) or an integral multiple thereof, in the conveying run.

5. Conveying device according to one or more of the claims 1 to 4, characterised thereby, that a crank drive (16, 19), a controllably reversible motor or the like is provided for the reciprocating movement of the carriage (15) with the auxiliary conveyor belt (20).

6. Method for the conveying of confectionery pieces (3) lying one beside the other in rows (5) transversely to the conveying direction (2) and for the setting of a group spacing (7'), in which method the confectionery pieces (3) are transferred row by row from a first conveyor belt (10), which is driven at a first speed v₁, to a second conveyor belt (26), which is driven at a second speed v₂, characterised thereby, that the rows (5) are transferred from the first conveyor belt (10) initially onto an auxiliary conveyor belt (20), for which the auxiliary conveyor belt is driven at the speed v₁ of the first conveyor belt (10) during the transfer, that the auxiliary conveyor belt (20) is driven at the speed v₂ of the second conveyor belt (26) after completed transfer of the group (4) onto the auxiliary conveyor belt and maintained during the transfer of the group (4) onto the second conveyor belt (26).

7. Method according to claim 6, characterised thereby, that the auxiliary conveyor belt (20) is moved opposite to the conveying direction (2) during the reception of the group (4) and to and fro in the conveying direction (2) during the delivery of the group.

8. Method according to claim 6 and 7, characterised thereby, that the ratio of the time, during which the auxiliary conveyor belt (20) is moved opposite to the conveying direction (2), to the time, during which the auxiliary conveyor belt (20) is moved in the conveying direction (2), is varied for variation of the group spacing (7').

9. Method according to claim 6 to 8, characterised thereby, that the speed v₂ of the second conveyor belt (26) is kept constant even in the case of changing speed v₁ of the first conveyor belt (10).

10. Method according to claim 9, characterised thereby, that the speeds of the drive of the auxiliary conveyor belt (20) are synchronised with the speeds v₁ and v₂ respectively of the first and second conveyor belt (10, 26).

## Revendications

1. Dispositif transporteur avec une première courroie transporteuse (10) entraînée à une première vitesse v₁, sur laquelle sont amenés des bonbons (3) disposés en rangées (5) transversales au sens (2) du transport, avec un premier espacement (6) entre les rangées, avec une deuxième courroie transporteuse (26) entraînée à une deuxième vitesse v₂ différente de la première vitesse, sur laquelle sont déposées les rangées (5) de bonbons (3) avec un deuxième espacement (7') différent du premier espacement (7) entre les rangées, les axes de renvoi (24, 30), tournés l'un vers l'autre, de la première et de la deuxième des courroies (10, 26) étant disposés sur un chariot (15) entraîné en un mouvement de va-et-vient et constituant un poste de transfert mobile,
**caractérisé** en ce qu'une courroie transporteuse auxiliaire (20) est prévue sur le chariot (15) entre les deux axes de renvoi (24, 30), laquelle présente un entraînement pouvant être changé alternativement entre deux vitesses auxiliaires en fonction du sens momentané du mouvement du chariot (15).

2. Dispositif transporteur selon la revendication 1, caractérisé en ce que, lors du mouvement du chariot (15) en sens opposé au sens de transport (2), la courroie transporteuse (20) est entraînée à une vitesse auxiliaire correspondant à la première vitesse v₁ de la première courroie transporteuse (10) et que, lors du mouvement du chariot (15) dans le sens de transport (2), elle est entraînée à une vitesse auxiliaire correspondant à la deuxième vitesse v₂ de la deuxième courroie transporteuse (26).

3. Dispositif transporteur selon la revendication 1 ou 2, caractérisé en ce que l'entraînement du chariot (15) pour son mouvement de va-et-vient est synchronisé avec l'espacement (6) des rangées sur la première courroie transporteuse (10) ou sur une autre courroie transporteuse (9) encore disposée en amont.

4. Dispositif transporteur selon une ou plusieurs des revendications 1 à 3, caractérisé en ce que, pour la formation de groupes (4), ou pour la modification de l'espacement (7) des groupes, la courroie transporteuse auxiliaire (20) présente, sur son brin transporteur, une longueur permettant de recevoir un groupe (4) complet de bonbons (3), ou bien un multiple entier de ce groupe.

5. Dispositif transporteur selon une ou plusieurs des revendications 1 à 4, caractérisé en ce que, pour le mouvement de va-et-vient du chariot (15) avec la courroie transporteuse auxiliaire (20), il est prévu un mécanisme d'entraînement à came (16, 19), un moteur pouvant être commandé de manière réversible, ou autre moyen similaire.

6. Procédé de transport de bonbons (3) disposés côte-à-côte en rangées (5) transversalement au sens (2) du transport, et de réglage d'un espacement (7') des groupes, dans lequel les bonbons (3) sont transférés par rangées à partir d'une première courroie transporteuse (10) entraînée à une première vitesse v₁ sur une deuxième courroie transporteuse (26) entraînée à une deuxième vitesse v₂,
**caractérisé** en ce que les rangées (5) sont d'abord transférées à partir de la première courroie transporteuse (10) sur une courroie auxiliaire (20), la courroie auxiliaire étant entraînée pendant le transfert à la vitesse v₁ de la première courroie transporteuse (10), en ce que, après la fin du transfert du groupe (4) sur la courroie transporteuse auxiliaire (20), la courroie transporteuse auxiliaire est entrainée à la vitesse v₂ de la deuxième courroie transporteuse (26) et est maintenue à cette vitesse pendant le transfert du groupe (4)sur la deuxième courroie transporteuse (26).

7. Procédé selon la revendication 6, caractérisé en ce que la courroie transporteuse auxiliaire (20) est animée d'un mouvement de va-et-vient, dans le sens contraire au sens (2) de transport pendant la réception du groupe (4), et dans le sens (2) de transport pendant le déchargement du groupe.

8. Procédé selon les revendications 6 et 7, caractérisé en ce que, pour faire varier l'espacement (7') des groupes, on modifie le rapport des durées du mouvement de la courroie transporteuse auxiliaire (20) en sens opposé au sens (2) de transport et du mouvement de ladite courroie auxiliaire dans le sens (2) de transport.

9. Procédé selon les revendications 6 à 8, caractérisé en ce que, même quand la vitesse v₁ de la première courroie transporteuse (10) varie, la vitesse v₂ de la deuxième courroie transporteuse (26) est maintenue constante.

10. Procédé selon la revendication 9, caractérisé en ce que les vitesses de l'entraînement de la courroie transporteuse auxiliaire (20) sont synchronisées avec les vitesses v₁ et v₂ de la première et de la deuxième des courroies transporteuses (10, 26).
